(19) Europäisches Patentamt
European Patent Office
Office européen des brevets

(11) **EP 3 835 764 A1**

(12) **EUROPÄISCHE PATENTANMELDUNG**

(43) Veröffentlichungstag:
**16.06.2021   Patentblatt 2021/24**

(51) Int Cl.:
***G01N 21/77*** (2006.01)          ***G02B 6/124*** (2006.01)
***G02B 6/12*** (2006.01)

(21) Anmeldenummer: **20204673.6**

(22) Anmeldetag: **29.10.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(30) Priorität: **12.12.2019   DE 102019134172**

(71) Anmelder: **Dr. Johannes Heidenhain GmbH**
**83301 Traunreut (DE)**

(72) Erfinder:
• HOLZAPFEL, Wolfgang
83119 Obing (DE)
• KUGLER, Michael
83308 Trostberg (DE)
• RÖTZER, Martin
83301 Traunreut (DE)
• SCHADE, Marco
83278 Traunstein (DE)

(54) **VORRICHTUNG UND VERFAHREN ZUR EINKOPPLUNG VON LICHT MIT VERSCHIEDENEN WELLENLÄNGEN IN EINEM WELLENLEITER**

(57)    Die vorliegende Erfindung betrifft eine Vorrichtung und ein Verfahren zum Einkoppeln von Licht mit verschiedenen Wellenlängen in einen Wellenleiter. Die Vorrichtung weist einen planaren Wellenleiter, einen Gitterkoppler mit einer Gitterkonstante und mindestens zwei Lichtquellen auf. Der Wellenleiter ist erfindungsgemäß so aufgebaut, dass die Führung von Wellenleitermoden der Ordnung j>0 für mindestens eine einzukoppelnde Wellenlänge möglich ist. Die Erfindung betrifft weiterhin ein Verfahren zum Einkoppeln von Licht aus mindestens zwei Lichtquellen mit unterschiedlicher Wellenlänge in einen Wellenleiter über einen Gitterkoppler mit einer Gitterkonstante. Darüber hinaus wird die Verwendung der erfindungsgemäßen Vorrichtung und des erfindungsgemäßen Verfahrens zur Dunkelfeldanregung in der Molografie und der Fluoreszenzspektroskopie offenbart.

Fig. 2

**Beschreibung**

Die vorliegende Erfindung betrifft eine Vorrichtung und ein Verfahren zum Einkoppeln von Licht mit verschiedenen Wellenlängen in einen Wellenleiter. Die Vorrichtung weist einen planaren Wellenleiter, einen Gitterkoppler mit einer Gitterkonstante und mindestens zwei Lichtquellen auf. Der Wellenleiter ist erfindungsgemäß so aufgebaut, dass die Führung von Wellenleitermoden der Ordnung j>0 für mindestens eine einzukoppelnde Wellenlänge möglich ist. Die Erfindung betrifft weiterhin ein Verfahren zum Einkoppeln von Licht aus mindestens zwei Lichtquellen mit unterschiedlicher Wellenlänge in einen Wellenleiter über einen Gitterkoppler mit einer Gitterkonstante. Darüber hinaus wird die Verwendung der erfindungsgemäßen Vorrichtung und des erfindungsgemäßen Verfahrens zur Dunkelfeldanregung in der Molografie und der Fluoreszenzspektroskopie offenbart.

Anwendung finden Wellenleiter beispielsweise in Biosensoren. Solche Biosensoren, die auf Wellenleitern basieren, haben verschiedene Vorteile: Erstens erlaubt die Feldüberhöhung der im Wellenleiter geführten Mode besonders sensitive Messungen an der Wellenleiteroberfläche. Zweitens ermöglicht die Dunkelfeldanregung eine räumliche Trennung von Anregung und Detektion, was das detektierte Streulicht reduziert (EP 2 618 130 A1, EP1 327 135 B1).

Insbesondere bei Anwendungen in der Fluoreszenzmikroskopie ist es üblich - für die Anregung von verschiedenen Fluorophoren - mehrere Wellenlängen zur Verfügung zu stellen, welche dann in den Wellenleiter eingekoppelt werden müssen. Die EP 1 327 135 B1 offenbart beispielsweise ein optisches System zur Lumineszenzbestimmung, bei der Lichtquellen mit einer Wellenlänge von $\lambda_A$=633 nm, $\lambda_B$=532 nm und $\lambda_C$=492 nm verwendet werden.

Auch bei der kombinierten Anwendung der Molografie und der Fluoreszenzspektroskopie sind mehrere Wellenlängen erforderlich: eine Wellenlänge $\lambda_1$ für die Dunkelfeldanregung der molografischen Detektion und eine weitere Wellenlänge $\lambda_2$ für die Dunkelfeldanregung der Fluoreszenzdetektion.

Bei der Anwendung von Wellenleitern in optischen Vorrichtungen spielt die Lichteinkopplung eine entscheidende Rolle. Dies kann beispielsweise über eine polierte Stirnfläche des Wellenleiters geschehen (Stirnflächeneinkopplung), über ein Prisma (Prismenkopplung) oder über eine Gitterstruktur (Gitterkoppler). Im Rahmen der vorliegenden Erfindung ist insbesondere die Einkopplung über einen Gitterkoppler von Interesse. Das Licht der verwendeten Wellenlängen muss unter definierten Einkoppelwinkeln in den Wellenleiter eines Biosensors eingekoppelt werden. Dabei ist der Einkoppelwinkel eine Funktion der Wellenlänge des einzukoppelnden Lichts.

Die Resonanzbedingung für die Einkopplung von Licht aus dem Medium Luft in einen Gitterkoppler ist allgemein gegeben durch

$$\alpha = \arcsin\left(N - \frac{m\lambda}{\Lambda_K}\right) \qquad (1)$$

wobei $\alpha$ den Einkoppelwinkel bezeichnet, N den effektiven Brechungsindex des Wellenleiters (für diese Wellenlänge), m die Beugungsordnung des Gitterkopplers (diese ist fest m=1), $\lambda$ die einzukoppelnde Wellenlänge und $\Lambda_K$ die Gitterkonstante des Gitterkopplers. Für verschiedene Wellenlängen $\lambda$ ergeben sich entsprechend verschiedene Einkopplungswinkel. Der Betrag der Differenz zwischen zwei Einkopplungswinkeln wird als Divergenzwinkel bezeichnet.

Die einfachste Lösung im Sinne eines kompakten optischen Aufbaus ist es, zwei räumlich getrennte Gitterkoppler mit zwei verschiedenen Gitterkonstanten $\Lambda_{K,1}$, $\Lambda_{K,2}$ zu benutzen, sodass die Einkoppelwinkel $\alpha_1$, $\alpha_2$ für beide Wellenlängen $\lambda_1$, $\lambda_2$ separat auf ähnliche Werte $\alpha_1 \approx \alpha_2$ eingestellt werden können.

Eine räumliche Trennung der Gitterkoppler in Propagationsrichtung des Lichts im Wellenleiter - d.h. Anordnung hintereinander - ist jedoch sehr nachteilig, da dann Licht, das am ersten Gitterkoppler eingekoppelt wird, bei der Propagation durch den räumlich getrennten zweiten Gitterkoppler zum Teil wieder ausgekoppelt wird.

Eine räumliche Trennung der Gitterkoppler senkrecht (oder schräg) zur Propagationsrichtung der ersten Wellenlänge im Wellenleiter ist ebenfalls nachteilig, da sich dann der Bauraum der Einkopplungseinheit in eine Richtung deutlich vergrößert.

Alternativ kann der Gitterkoppler als bidiffraktiver Koppler mit Überlagerung von Gitterkonstanten $\Lambda_{K,1/2}$ ausgeführt werden, der für beide Wellenlängen die Einkopplungsbedingung bei je einem bestimmten Einkoppelwinkel $\alpha_1$, $\alpha_2$ erfüllt, und die wiederum auf ähnliche Werte $\alpha_1 \approx \alpha_2$ eingestellt werden können. Bidiffraktive Koppler bedeuten jedoch einen höheren Herstellungsaufwand und sind deutlich weniger effizient. Zudem gilt auch hier, dass an der zweiten Gitterperiode bereits wieder Licht der ersten Gitterperiode in störende Ordnungen ausgekoppelt wird, was zu unerwünschtem Streulicht führt.

Besonders vorteilhaft wäre es also, nur einen Gitterkoppler mit einer Gitterkonstante $\Lambda_K$ zu benutzen, über den Licht beider Wellenlängen $\lambda_1$, $\lambda_2$ einkoppelt werden kann.

Die EP 1 327 135 B1 beschreibt diesbezüglich ein Multifacettenprisma, welches den Divergenzwinkel $\Delta\alpha$ zwischen den Anregungslichtpfaden mit verschiedenen Wellenlängen ($\lambda_A$=633 nm, $\lambda_B$=532 nm) um mindestens einen Faktor 1.2 reduziert. Hierfür muss entsprechend ein weiteres Bauteil in den optischen Pfad der Vorrichtung eingebaut werden, nämlich ein Multifacettenprisma. Die Bauteile einer optischen Vorrichtung müssen im Allgemeinen sehr fein justiert werden, um den optischen Pfad für das eingestrahlte Licht optimal bereit zu stellen. Jedes zusätzliche Bauteil erhöht daher den Aufwand bei der Justage und gleichzeitig die Störanfälligkeit der gesamten Vorrichtung.

Weiterhin nachteilig an der Prismenlösung ist, dass der Drehpunkt des Winkelverstellers im aktuierten Prisma und nicht im Wellenleiter liegt, sodass beim Verstellen des Winkels der Auftreffpunkt des Lichts auf dem Wellenleiter wandert. Daher muss dieser wiederum, ggf. iterativ, nachgeführt werden, damit der Gitterkoppler getroffen wird. Dies ist insbesondere unvorteilhaft, wenn mit hoher Schaltfrequenz zwischen verschiedenen Wellenlängen gewechselt werden soll.

Aufgabe der Erfindung ist es daher, die Nachteile des Standes der Technik zu beheben und eine Vorrichtung und ein Verfahren zur Verfügung zu stellen, die die Einkopplung von Licht aus Lichtquellen mit verschiedenen Wellenlängen über einen Gitterkoppler mit einer Gitterkonstante in einen Wellenleiter ermöglicht, bei gleichzeitig kompakter und robuster, d.h. wenig störanfälliger Bauweise.

Hierfür stellt die Erfindung eine Vorrichtung aufweisend einen Gitterkoppler mit einer Gitterperiode, mindestens zwei Lichtquellen und einen planaren Wellenleiter zur Einkopplung von Licht mit mindestens zwei verschiedenen Wellenlängen ($\lambda_1$, $\lambda_2$) in den Wellenleiter bereit, wobei der Wellenleiter eine wellenleitende Schicht mit dem effektiven Brechungsindex $N(\lambda_k, j_k)$, mit $\lambda_k$ der Wellenlänge des eingekoppelten Lichts und $j_k$ der Ordnung der Wellenleitermode, und der Dicke d aufweist, an die eine Substratschicht und eine Deckschicht angrenzen; und wobei Licht der Wellenlänge $\lambda_k$ einen Einkoppelwinkel $\alpha_k$ in den Wellenleiter aufweist; und wobei der Betrag der Differenz zwischen den Einkoppelwinkeln verschiedener Lichtquellen der Divergenzwinkel $\Delta\alpha$ ist

**dadurch gekennzeichnet, dass**

die wellenleitende Schicht eine Dicke d und effektive Brechungsindices $N(\lambda_k, j_k)$ aufweist, so dass die Führung von Wellenleitermoden der Ordnung $j_k > 0$ für mindestens eine eingekoppelte Wellenlänge möglich ist;

und die dazu eingerichtet ist, Licht mit mindestens zwei verschiedenen Wellenlängen über den einen Gitterkoppler unter einem Divergenzwinkel $\Delta\alpha < 6°$ einzukoppeln;

zur Verfügung.

Darüber hinaus stellt die Erfindung ein Verfahren zum Einkoppeln von Licht aus mindestens zwei Lichtquellen mit verschiedenen Wellenlängen ($\lambda_1$, $\lambda_2$) über einen Gitterkoppler mit einer Gitterperiode in einen Wellenleiter bereit, dadurch gekennzeichnet, dass

- Licht aus mindestens zwei Lichtquellen mit verschiedenen Wellenlängen ($\lambda_1$, $\lambda_2$) auf den Gitterkoppler eingestrahlt wird;
- Licht der Wellenlänge $\lambda_1$ mit dem Einkoppelwinkel $\alpha_1$ in die Wellenleitermode $j_1$ und Licht der Wellenlänge $\lambda_2 < \lambda_1$ mit dem Einkoppelwinkel $\alpha_2$ in die Wellenleitermode $j_2$ eingekoppelt wird, mit $j_2 > j_1$;
- Optional Licht mindestens einer weiteren Lichtquelle mit der Wellenlänge $\lambda_k < \lambda_2 < \lambda_1$ mit dem Einkoppelwinkel $\alpha_k$ in die Wellenleitermode $j_k$ eingekoppelt wird, mit $j_k > j_2 > j_1$,

wobei der Betrag der Differenz zwischen den Einkoppelwinkeln verschiedener Lichtquellen $\Delta\alpha < 6°$ beträgt; zur Verfügung.

Weiterhin wird die Verwendung der erfindungsgemäßen Vorrichtung und/oder des erfindungsgemäßen Verfahrens zur Dunkelfeldanregung in der Molografie und der Fluoreszenzspektroskopie beschrieben.

**Detaillierte Beschreibung**

Wird die Ausbreitung von Licht in einem Wellenleiter mit den Maxwell-Gleichungen beschrieben und werden die dabei durch die Geometrie des Wellenleiters gegebenen Randbedingungen berücksichtigt, so resultiert mit der Modengleichung eine Eigenwertgleichung, die nur für einen diskreten, endlichen Satz von gebundenen Lichtzuständen gelöst werden kann. Diese Lösungen der Modengleichung werden als Wellenleitermoden bzw. geführte Moden bezeichnet, welche sich in ihrem effektiven Brechungsindex N unterscheiden, und deren Ordnung mit der Modenzahl *j=0, 1, 2,...* nummeriert wird. Je nach eingestrahlter Polarisation (transversal elektrisch, TE oder transversal magnetisch, TM) werden die im planaren Wellenleiter geführten Moden dann als TE0, TE1,... und TM0, TM1,... bezeichnet.

Prinzipiell kann die Polarisation frei gewählt werden. Da sich der effektive Brechungsindex von TE- und TM-Moden (besonders für kleine Modenzahl j) nur wenig unterscheidet, kann der Divergenzwinkel $\Delta\alpha$ allein durch die Kombination von TM- und TE-Moden jedoch nicht unter 6° reduziert werden. Darüber hinaus ist durch den Aufbau des Gitterkopplers meist bereits festgelegt, welche Polarisation verwendet wird, da die Kopplungsgitter im Allgemeinen für eine Polarisation besonders effektiv arbeiten.

In der vorliegenden Erfindung können TE-Moden oder TM-Moden oder eine Kombination dieser verwendet werden.

Der effektive Brechungsindex N des Wellenleiters für eine bestimmte Wellenlänge $\lambda$ ist von der Ordnung der geführten Wellenleitermode j abhängig, und zwar derart, dass der effektive Brechungsindex für Wellenleitermoden höherer Ordnung sinkt. Ursache für den geringeren effektiven Brechungsindex N bei Wellenleitermoden höherer Ordnung ist, dass ihr elektrisches Feld weiter in das umliegende Substrat- und Medienmaterial hinausreicht. Dieses hat einen niedrigeren Brechungsindex als das Material der wellenleitenden Schicht, wodurch der effektive Brechungsindex der Wellenleitermode sinkt.

Damit ist auch der Einkoppelwinkel wie folgt abhängig von der Modenordnung.

$$\alpha = \arcsin\left(N(\lambda_k, j_k) - \frac{\lambda_k}{\Lambda_K}\right) \qquad (2)$$

Bei Biosensoren, die auf planaren Wellenleitern basieren, wird in der Regel mit singlemodigen Wellenleitern gearbeitet, das heißt das Licht unterschiedlicher Wellenlängen wird in die Mode der Ordnung j=0 des Wellenleiters eingekoppelt, um keine zusätzlichen Streulichtkanäle durch Intermodenstreuung zu erlauben. Zu diesem Zweck werden dann Wellenleiter benutzt, deren Dicke d und effektiver Brechungsindex N so gewählt sind, dass nur die Grundmode (Modenzahl j=0, also TE0 bzw. TM0) geführt werden kann. Dies führt jedoch dazu, dass die Einkoppelwinkel von Licht verschiedener Wellenlängen sich stark unterscheiden, und im Allgemeinen die eingekoppelten Wellenlängen einen Divergenzwinkel über 6° aufweisen.

Überraschenderweise hat sich jedoch gezeigt, dass es möglich ist, den Divergenzwinkel auf unter 6° zu verringern, indem auf die Forderung der Singlemodigkeit verzichtet wird. Damit ergibt sich ein zusätzlicher Freiheitsgrad, nämlich die Ordnung $j$ der im Wellenleiter geführten Mode.

Es lässt sich für gegebene Wellenlängen $\lambda_1$, $\lambda_2$ eine Kombination aus effektiven Brechungsindices $N(\lambda_1, j_1)$, $N(\lambda_2, j_2)$ und gemeinsamer Gitterkonstante $\Lambda_K$ finden, für die die Einkopplungsbedingung für Licht der Wellenlänge $\lambda_1$ in die Wellenleitermode $j_1$ für einen Einkopplungswinkel $\alpha_1$ erfüllt ist, und gleichzeitig die Einkopplungsbedingung für Licht der Wellenlänge $\lambda_2 < \lambda_1$ in die Mode $j_2$ mit $j_2 > j_1$, i.d.R. $j_2 = j_1 + 1$ für einen Einkopplungswinkel $\alpha_2 \approx \alpha_1$ erfüllt ist, also:

$$\alpha_1 = \arcsin\left(N(\lambda_1, j_1) - \frac{\lambda_1}{\Lambda_K}\right) \approx \alpha_2 = \arcsin\left(N(\lambda_2, j_2) - \frac{\lambda_2}{\Lambda_K}\right) \qquad (3)$$

Anschaulich gesprochen gleicht der niedrigere effektive Brechungsindex $N(\lambda_2, j_2)$ der höheren Wellenleitermode $j_2$ die kleinere Wellenlänge $\lambda_2$ aus, so dass beide Einkopplungswinkel $\alpha_1$ bzw. $\alpha_2$ näher beieinander liegen oder sogar identisch sind. Freier Parameter zur Erfüllung der Bedingung $\alpha_1 \approx \alpha_2$ über passende effektive Brechungsindices der jeweiligen Wellenleitermoden ist neben der Ordnung der Wellenleitermoden vor allem die Schichtdicke des wellenleitenden Materials.

Die Erfindung sieht demnach eine geeignete Kombination von effektiven Brechungsindices N und Gitterkonstante $\Lambda_K$ vor, für die sich die Einkoppelwinkel $\alpha_1$ und $\alpha_2$ ähneln. Dies wird erreicht, indem für die kürzere Wellenlänge in eine höhere Mode eingekoppelt wird.

TM-Moden weisen einen geringfügig geringeren effektiven Brechungsindex als TE-Moden gleicher Ordnung j auf. Daher kann das erfindungsgemäße Ziel, die kürzere Wellenlänge $\lambda_2$ durch einen geringeren effektiven Brechungsindex $N(\lambda_2, j_2)$ zu kompensieren, in einer Ausführungsform der Erfindung dadurch unterstützt werden, dass man für $\lambda_2$ eine TM-Mode mit $N(\lambda_2, j_2)$ wählt und für $\lambda_1$ eine TE-Mode mit $N(\lambda_1, j_1)$. Dies hat den zusätzlichen Vorteil, dass man auf Detektionsseite die einzelnen Wellenlängen über ihre Polarisation mittels eines geeigneten Analysators, beispielsweise einem Polarisator, wieder trennen kann.

Ein planarer Wellenleiter im Sinn der Erfindung ist ein Wellenleiter, der aus einer wellenleitenden Schicht mit einem Brechungsindex nw besteht, die zwischen zwei Schichten eingeschlossen ist, die einen niedrigeren Brechungsindex aufweisen. An die wellenleitende Schicht grenzt erfindungsgemäß eine Substratschicht mit einem Brechungsindex $n_S$ und eine Deckschicht mit einem Brechungsindex $n_D$ an.

In einer Ausführungsform der Erfindung weist die wellenleitende Schicht des Wellenleiters ein Material aus der Gruppe enthaltend $Ta_2O_5$, $Si_3N_4$, $SiO_xN_y$, $TiO_2$, $SiC$ oder Kombinationen hiervon auf. Besonders bevorzugt weist die wellenleitende Schicht des Wellenleiters $Ta_2O_5$ auf.

In einer Ausführungsform der Erfindung weist die Substratschicht ein Material aus der Gruppe enthaltend D263, Floatglas, Borofloat, Herasil auf. Besonders bevorzugt weist die Substratschicht D263 auf.

In einer weiteren Ausführungsform der Erfindung weist die Deckschicht ein Material aus der Gruppe enthaltend $SiO_2$, Wasser, DMSO und Luft oder eine Kombination dieser auf. Weist die Deckschicht eine Kombination von Materialien auf, so grenzt an einen Teil der wellenleitenden Schicht eine Deckschicht aus einem Material mit dem Brechungsindex $n_{D1}$ und an einen weiteren Teil der wellenleitenden Schicht eine Deckschicht aus einem Material mit dem Brechungsindex $n_{D2}$ an. In einer Ausführungsform der Erfindung grenzt an einen Teil des wellenleitenden Materials eine Deckschicht aus $SiO_2$ an und an einen weiteren Teil der wellenleitenden Schicht eine Deckschicht aus Luft oder Wasser. In einer besonders bevorzugten Ausführungsform grenzt eine Deckschicht aus $SiO_2$ im Bereich des Gitterkopplers an die wellenleitende Schicht an, während außerhalb dieses Bereiches eine Deckschicht aus Wasser oder Luft an die wellenleitende Schicht angrenzt.

Im Rahmen der Erfindung wird Licht der Wellenlänge $\lambda_k$ mit einem Einkoppelwinkel $\alpha_k$ in den Wellenleiter eingekoppelt, wobei der Betrag der Differenz zwischen den Einkoppelwinkeln verschiedener Lichtquellen der Divergenzwinkel $\Delta\alpha$ ist.

Gemäß der vorliegenden Erfindung ist der Divergenzwinkel $\Delta\alpha < 6°$, bevorzugt $\Delta\alpha < 3°$, besonders bevorzugt $\Delta\alpha \approx 0°$.

In einer besonders vorteilhaften Ausführungsform der vorliegenden Erfindung ist der Divergenzwinkel gleich oder kleiner als die Resonanzbreite bzw. der Akzeptanzwinkel des Gitterkopplers. In diesem Fall können vorteilhafterweise Lichtbündel mit diesen Wellenlängen gleichzeitig über den Gitterkoppler in den Wellenleiter eingekoppelt werden.

Geeignete Gitterkoppler, die in der erfindungsgemäßen Vorrichtung Verwendung finden, weisen eine Gitterkonstante $\Lambda_K$ im Bereich von 200 nm bis 700 nm, bevorzugt von 300 bis 500 nm, besonders bevorzugt von 360 nm auf.

Der effektive Brechungsindex N der wellenleitenden Schicht des Wellenleiters hängt von der Wellenlänge $\lambda$ des eingestrahlten Lichts, der Ordnung der Wellenleitermode $j$, den Brechungsindices des Substrats ns, des Wellenleiters nw und der Deckschicht $n_D$ sowie der Wellenleiterdicke d ab. Die sich für asymmetrische Schichtwellenleiter ergebenden Eigenwertgleichungen zur Bestimmung der effektiven Brechungsindices N können nicht analytisch berechnet werden, sondern müssen numerisch gelöst werden.

Erfindungsgemäß muss die Dicke der wellenleitenden Schicht so gewählt werden, dass für die kürzere Wellenlänge die höhere Wellenleitermode im Wellenleiter erlaubt ist. Da der effektive Brechungsindex für ein festgelegte Materialien der wellenleitenden Schicht, der Substratschicht und der Deckschicht, sowie bekannter Wellenlänge und Polarisation des eingestrahlten Lichts nur eine Funktion der Dicke d ist, gilt $N(\lambda_k, j_k) = N(\lambda_k, j_k, d)$ und es kann das passende Wellenleiterdesign abgeleitet werden.

Für identische Gitterkonstanten $\Lambda_K$ und einen vorgegebenen Divergenzwinkel $\Delta\alpha$ (i.d.R. $\Delta\alpha=0$) erhält man für zwei Wellenlängen $\lambda_1$, $\lambda_2$, Moden $j_1$, $j_2$ und o.b.d.A. $\alpha_2=\alpha_1+\Delta\alpha$ durch Gleichsetzen der beiden Formeln aus Gleichung (3) folgende Gleichung:

$$\arcsin\left(N(\lambda_1, j_1, d) - \frac{\lambda_1}{\Lambda_K}\right) = \arcsin\left(N(\lambda_2, j_2, d) - \frac{\lambda_2}{\Lambda_K}\right) - \Delta\alpha \qquad (4)$$

Bis auf die Wellenleiterdicke d sind alle Parameter bekannt, nach numerischem Lösen der Gleichung erhält man diese als Funktion des Divergenzwinkels $\Delta\alpha$..

Erfindungsgemäß wird die Dicke d der wellenleitenden Schicht und dessen effektiver Brechungsindex N so gewählt, dass die Führung von Wellenleitermoden der Ordnung $j>0$ für mindestens eine eingekoppelte Wellenlänge möglich ist.

Dieser Ansatz funktioniert auch für das Einkoppeln von Licht aus mehr als zwei Lichtquellen mit verschiedenen Wellenlängen und ist in der Praxis nur dadurch begrenzt, dass wegen $n_W>N>\max(n_D, n_S)$ der effektive Brechungsindex für Wellenleitermoden höherer Ordnung nicht unbegrenzt sinken kann. Das heißt der effektive Brechungsindex ist größer als der Brechungsindex von sowohl Substrat als auch Deckschicht $\max(n_D, n_S)$.

In einer Ausführungsform der Erfindung wird Licht aus mindestens zwei Lichtquellen mit verschiedenen Wellenlängen eingekoppelt, bevorzugt wird Licht aus zwei bis vier Lichtquellen mit verschiedenen Wellenlängen eingekoppelt, besonders bevorzugt wird Licht aus genau zwei Lichtquellen mit verschiedenen Wellenlängen eingekoppelt.

Insbesondere für die Verwendung in der Fluoreszenzdetektion in Kombination mit der Molografie, bei der das eingestrahlte Anregungslicht (und damit auch das erzeugte Streulicht) vom emittierten Signallicht durch den Stokes-Shift spektral getrennt ist, und somit entsprechend gefiltert werden kann, ist die erfindungsgemäße Vorrichtung vorteilhaft.

Bei der Wahl der beiden Wellenlängen für die Anregung der Molografie und der Fluoreszenz sind folgende Randbedingungen zu berücksichtigen: Im Hinblick auf die molografische Detektion hängt die benötigte Gitterperiode $\Lambda_M$ des Mologramms von der Wellenlänge $\lambda_1$ des eingestrahlten Lichtes und vom effektiven Brechungsindex $N(\lambda_1, j_1)$ des Wellenleiters ab, typischerweise beträgt sie etwa die halbe Vakuumwellenlänge des eingestrahlten Lichtes. Da derart feine Strukturen einen großen Herstellungsaufwand bedeuten, wird eine möglichst große Wellenlänge $\lambda_1$ angestrebt, um Mologrammstrukturen mit möglichst grober Gitterkonstante $\Lambda_M$ zu ermöglichen.

Nach oben ist die Wellenlänge $\lambda_1$ jedoch dadurch begrenzt, dass die Absorption von Wasser für höhere Wellenlängen immer weiter zunimmt und außerdem herkömmliche Silizium-basierte Photodetektoren oberhalb von 1000 nm nicht mehr verwendbar sind. Insgesamt ergibt sich daher für $\lambda_1$ ein sinnvoller Wellenlängenbereich von 600-1000 nm.

Im Hinblick auf die Fluoreszenzdetektion sind effiziente Fluorophore, insbesondere fluoreszente rekombinante Proteine, fast ausschließlich im sichtbaren Wellenlängenbereich von 400-700 nm verfügbar, was die Wahl der Wellenlänge für die Fluoreszenzanregung auf $\lambda_2<\lambda_1$ einschränkt. Des Weiteren muss sichergestellt werden, dass die verwendeten Fluorophore, welche ihr Anregungsspektrum bei $\lambda_2$ haben, sich nicht auch mit der Wellenlänge $\lambda_1$ anregen lassen. Dies würde nämlich dazu führen, dass bei Einschalten der Lichtquelle der Wellenlänge $\lambda_1$ für die molografische Detektion ständig Fluorophore angeregt würden, und so freie Radikale entstünden, die die zu untersuchenden biologischen Prozesse beeinflussen oder die Fluorophore bleichen. Die Tatsache, dass das Absorptionsspektrum eines Fluorophors zu längeren Wellenlängen rapide abfällt, ist hierbei hilfreich. Um sicherzustellen, dass die Absorption des Fluorophors bei $\lambda_1$ auf ungefähr null abgefallen ist, d.h. $A_{ex}(\lambda_1)\approx0$, sollte ein spektraler Sicherheitsabstand von ca. 50-100 nm eingehalten werden. Soll zusätzlich sichergestellt werden, dass auch das Emissionsspektrum des verwendeten Fluorophors bei $\lambda_1$ ungefähr auf null abgefallen ist, d.h. $I_{em}(\lambda_1)\approx0$, muss dieser Sicherheitsabstand sogar noch um den Stokes Shift von ca. 25 nm vergrößert werden und der zu langen Wellenlängen hin langsamere Abfall des Emissionsspektrums berücksichtigt werden. So ergibt sich ein vernünftiger Mindestabstand von $\Delta\lambda=\lambda_1-k_2\approx100$ nm.

In einer bevorzugten Ausführungsform der Erfindung unterscheiden sich die Wellenlängen ($\lambda_1$, $\lambda_2$, ...$\lambda_k$) des Lichts der Lichtquellen die eingekoppelt werden jeweils um mindestens $\Delta\lambda=150$ nm, besonders bevorzugt um mindestens $\Delta\lambda=100$ nm.

Im speziellen Fall kann für die Dunkelfeldanregung der molografischen Detektion daher beispielsweise eine Lichtquelle mit einer Wellenlänge von $\lambda_1=780(\pm10)$ nm gewählt werden und für die Dunkelfeldanregung der Fluoreszenzdetektion eine Lichtquelle mit einer Wellenlänge von $\lambda_2=660(\pm10)$ nm.

In einer Ausführungsform der Erfindung weist eine Lichtquelle eine Wellenlänge im Bereich von 600 nm-1000 nm, bevorzugt im Bereich von 700 nm-900 nm, besonders bevorzugt von $780(\pm10)$ nm auf und eine weitere Lichtquelle eine Wellenlänge im Bereich von 400 nm-700 nm, besonders bevorzugt von $660(\pm10)$ nm.

Es ergeben sich in diesem Beispiel damit zwei Wellenlängen $\lambda_1=780$ nm, $\lambda_2=660$ nm, welche sich um ca. 20% unterscheiden, wobei das Licht dieser beiden Wellenlängen in der experimentellen Durchführung auf vorteilhafte Weise in denselben Wellenleiter eingekoppelt werden muss. Bei der Verwendung eines singlemodigen Wellenleiters aus dem Stand der Technik ergibt sich ein Divergenzwinkel größer 6°, so dass das einzukoppelnde Licht dann aus entsprechend unterschiedlichen Richtungen eingestrahlt werden muss. Wenn das Anregungslicht verschiedener Lichtquellen aus einer Vielzahl verschiedener Raumrichtungen aus größerer Entfernung auf ein gemeinsames Ziel, nämlich den Gitterkoppler gelenkt wird, muss entsprechend viel Platz in einer optischen Vorrichtung zur Verfügung gestellt werden, der oft nicht vorhanden ist.

Die erfindungsgemäße Vorrichtung ermöglicht die Einkopplung des Lichts der einen Wellenlänge $\lambda_1$ in eine erste Mode der Ordnung $j_1 = 0,1,2, ...$ des Wellenleiters und die Einkopplung des Lichts einer kürzeren Wellenlänge $\lambda_2$ in eine weitere Mode der Ordnung $j_2$ des Wellenleiters, mit $j_2>j_1$. Die Materialien und die Dicke d des wellenleitenden Materials werden dabei erfindungsgemäß so gewählt, dass die Formel (4) erfüllt ist und der Divergenzwinkel $\Delta\alpha<6°$ ist. Dies bietet den Vorteil, dass eine kompakte Bauweise der Vorrichtung möglich ist, indem verschiedene Anregungslichtquellen an einem gemeinsamen Ort zusammengefasst werden können.

Geeignete Lichtquellen, sind alle Lichtquellen, die Licht im beschriebenen Wellenlängenbereich zur Verfügung stellen können, wie beispielsweise Laser, Laserdioden, Leuchtdioden, etc.

Bei der Herstellung von planaren Wellenleitern können Produktionstoleranzen vor allem bei der Schichtdicke d und dem Brechungsindex nw des Wellenleitermaterials auftreten, die die Einkoppelwinkel des eingestrahlten Lichts $\alpha_1$, $\alpha_2$ unabhängig voneinander um erfahrungsgemäß ca. +/-1° verschieben können. Da die Resonanzbreite bzw. der Akzeptanzwinkel des Gitterkopplers jedoch nur ca. 0.1° beträgt, muss weiterhin eine Feinjustage, das heißt eine Verstellung des Einkoppelwinkels vorgesehen werden, um die Einkoppelbedingung stets erfüllen zu können.

Um beim Einstellen des Einkoppelwinkels auf eine nachteilige Aktuierung des Wellenleiters/Biochips verzichten zu können, kann ein Goniometer mit virtuellem Drehpunkt (Virtual Pivot Goniometer), wie in US 3.724.953 beschrieben, verwendet werden. Bei diesem Winkelversteller wird der reale Drehpunkt eines Spiegels mit Hilfe einer geeigneten Linsenanordnung auf einen virtuellen Drehpunkt abgebildet, sodass beim Verstellen des Winkels der Auftreffpunkt des Lichts nicht wandert. Im Rahmen der Erfindung ist der virtuelle Drehpunkt der Gitterkoppler. Dieser Goniometeraufbau bietet einen Winkelverstellbereich von ungefähr +/-6°, was ausreichend ist, um Schwankungen der Schichtdicke oder des Brechungsindex der wellenleitenden Schicht (beides beeinflusst den effektiven Brechungsindex N des Wellenleiters und somit den Einkoppelwinkel a) zu kompensieren.

Die Anwendung eines solchen Goniometeraufbaus ist nur möglich, weil der Divergenzwinkel $\Delta\alpha$ erfindungsgemäß unter 6° liegt. Ohne vorherige Angleichung des Divergenzwinkels, also im Fall $\Delta\alpha>6°$, würden zu diesem Zweck für die beiden Wellenlängen $\lambda_1$, $\lambda_2$ zwei separate Goniometer benötigt werden, welche sich in den beiden optischen Pfaden befänden, die aus verschiedenen Raumrichtungen auf den Gitterkoppler gerichtet sind. Ein solcher Aufbau wäre aufgrund des Materialaufwands und des benötigten Bauraums aber nachteilig. Da der durch obige Lösung auf $\Delta\alpha<6°$ reduzierte Divergenzwinkel jedoch innerhalb des Verstellbereichs des Goniometers mit virtuellem Drehpunkt liegt, kann das Licht beider Wellenlängen aus derselben Raumrichtung auf den Gitterkoppler eingestrahlt werden, und in diesem gemeinsamen optischen Pfad ist dann nur ein Goniometer zur Feinjustage der Einkoppelwinkel $\alpha_1$, $\alpha_2$ nötig. Somit können verschiedene Ausführungsformen der erfindungsgemäßen Vorrichtung vorgeschlagen werden, die sich im Sinne der Erfindung vorteilhaft durch einen geringen Materialaufwand und kleinen Bauraum auszeichnen.

In einer Ausführungsform der Erfindung weist die erfindungsgemäße Vorrichtung daher weiterhin einen Goniometeraufbau auf, der mindestens einen Drehspiegel, zwei Linsen und einen virtuellen Drehpunkt am Gitterkoppler aufweist. Wobei eine erste Linse L1 die Brennweite $f_1$ und eine zweite Linse L2 die Brennweite $f_2$ aufweist. Geeignete Linsen sind beispielsweise plankonvexe, bikonvexe, konkav-konvexe oder diffraktive Linsen in zylindrischer, sphärischer oder freier (asphärischer) Form. Der mindestens eine Drehspiegel ist zwischen den beiden Linsen angeordnet und weist zur Linse L2 einen Abstand $s_1$ auf. Die Linse L2 wiederum weist zur Wellenleiterebene einen Abstand $s_2$ auf.

In einer Ausführungsform der Erfindung weist die erfindungsgemäße Vorrichtung einen Goniometeraufbau mit einem Drehspiegel, zwei Linsen und einen virtuellen Drehpunkt am Gitterkoppler auf. Die grundlegende Idee eines solchen Goniometeraufbaus ist in der US 3724953 beschrieben.

In einer Ausführungsform der Erfindung wird Licht mit verschiedene Wellenlängen $\lambda_1$, $\lambda_2$, ... $\lambda_k$ kollinear vereinigt durch das Goniometer mit virtuellem Drehpunkt auf einen Gitterkoppler als gemeinsamen Auftreffpunkt gelenkt. Das Licht mit verschiedenen Wellenlängen $\lambda_1$, $\lambda_2$, ... $\lambda_k$ kann dabei zum Beispiel mit Hilfe eines Strahlvereinigers kollinear vereinigt werden. Dabei durchlaufen die Lichtstrahlen vor dem Strahlvereiniger eine Kollimationslinse. Die Kollimationslinse kann beispielsweise eine Sammellinse sein, in deren Brennpunkt sich die Lichtquellen befinden. Alternativ können die Lichtstrahlen eine Laserdiode auch bereits kollinear vereinigt verlassen, wenn eine gemeinsame Lichtquelle in Form von auf einem Substrat vereinigten aktiven Zonen innerhalb der Laserdiode verwendet wird.

In einer Ausführungsform der Erfindung sind die beiden Linsen L1 und L2 so angeordnet, dass der optische Weg $d_{L1,L2}$ zwischen den Linsen der Summe der jeweiligen Brennweiten $f_1$ und $f_2$ entspricht, also $d_{L1,L2}=f_1+f_2$. Diese Bedingung stellt sicher, dass ein kollimiert eingestrahltes Lichtbündel das Goniometer wieder kollimiert verlässt.

In einer weiteren Ausführungsform der Erfindung sind die beiden Linsen L1 und L2 so angeordnet, dass der Weg zwischen den Linsen größer ist als die Summe der jeweiligen Brennweiten, also $d_{L1,L2}>f_1+f_2$. In diesem Fall wird ein konvergent austretendes Lichtbündel zur Verfügung gestellt werden. Auf diese Weise weist der auf den Gitterkoppler einfallende Strahl ein höheres Winkelspektrum auf, sodass die Einkopplungsbedingung einfacher getroffen werden kann.

In einer weiteren Ausführungsform der Erfindung sind die beiden Linsen L1 und L2 so angeordnet, dass der Weg zwischen den Linsen kleiner ist als die Summe der jeweiligen Brennweiten, also $d_{L1,L2}<f_1+f_2$. In diesem Fall wird ein divergent austretendes Lichtbündel zur Verfügung gestellt werden. Auf diese Weise weist der auf den Gitterkoppler einfallende Strahl ebenfalls ein höheres Winkelspektrum auf, sodass die Einkopplungsbedingung einfacher getroffen werden kann.

Der Wellenleiter mit Gitterkoppler wird so positioniert, dass sich der Abstand des Drehspiegels zur Linse L2 ($s_1$) und der Abstand der Linse L2 zur Wellenleiterebene ($s_2$), entsprechend der Abbildungsgleichung verhalten wie $1/s_1+1/s_2=1/f_2$. Diese Bedingung stellt sicher, dass die von der Linse L2 erzeugte Abbildung des realen Drehpunkts mit der Ebene des Wellenleiters zusammenfällt, sodass beim Verstellen des Winkels der Auftreffpunkt des Lichts nicht wandert.

Auf diese Weise können die benötigten Einkoppelwinkel für die verschiedenen Wellenlängen eingestellt werden. Beispielsweise können der Einkoppelwinkel $\alpha_1$ für die Wellenlänge $\lambda_1$, welche in die Mode $j_1$ des Wellenleiters eingekoppelt wird, und $\alpha_2$ für die Wellenlänge $\lambda_2$, welche in die Mode $j_2$ des Wellenleiters eingekoppelt wird, eingestellt werden.

In einer weiteren Ausführungsform der Erfindung weist der Goniometeraufbau mehrere Drehspiegel, besonders bevorzugt zwei Drehspiegel auf. Ein solcher Aufbau ist vorteilhaft, um mit jedem unabhängig drehbaren Drehspiegel das Licht je einer Lichtquelle mit einer Wellenlänge in den Wellenleiter einzukoppeln. So kann gleichzeitig das Licht mehrerer Lichtquellen mit verschiedenen Wellenlängen eingekoppelt werden. Dies ist vorteilhaft, wenn der Divergenzwinkel $\Delta\alpha$ für die Lichtquellen größer ist als die Resonanzbreite des Gitterkopplers.

So können zum Beispiel mit zwei unabhängigen Drehspiegeln D1, D2 zwei Einkoppelwinkel $\alpha_1$, $\alpha_2$ individuell eingestellt werden, sodass entsprechend Licht mit zwei Wellenlängen zeitgleich in den Wellenleiter eingekoppelt werden kann. Dies ist insbesondere vorteilhaft, wenn der Divergenzwinkel $\Delta\alpha$ der beiden Wellenlängen größer ist als die Resonanzbreite des Gitterkopplers.

Die Erfindung sieht daher eine Ausführungsform vor, bei der mindestens eine Lichtquelle um einen Winkel $\beta$ in einer Ebene parallel zum planaren Wellenleiter geschert angeordnet ist. Auf diese Weise wird Platz für einen weiteren Drehspiegel geschaffen, wobei jedoch beide Linsen L1, L2 des Goniometeraufbaus mit virtuellem Drehpunkt weiterhin von allen Lichtquellen gemeinsam durchlaufen werden.

In einer bevorzugten Ausführungsform der Erfindung weist die Vorrichtung zwei Lichtquellen auf, wovon eine Lichtquelle um einen Winkel $\beta$ in einer Ebene parallel zum planaren Wellenleiter geschert angeordnet ist.

In einer Ausführungsform der Erfindung ist die Lichtquelle, die für die Fluoreszenzspektroskopie genutzt wird und damit die Fluoreszenzwellenlänge $\lambda_2$ aufweist, um einen Winkel $\beta$ in einer Ebene parallel zum planaren Wellenleiter geschert angeordnet.

In einer weiteren Ausführungsform der erfindungsgemäßen Vorrichtung weist die Vorrichtung zwei Lichtquellen auf, wobei die erste Lichtquelle um einen Winkel $\beta$ in einer Ebene parallel zum planaren Wellenleiter geschert angeordnet ist und die zweite Lichtquelle um einen Winkel $-\beta$ in einer Ebene parallel zum planaren Wellenleiter geschert angeordnet ist.

Der gescherte Strahl trifft unter einem Winkel $\alpha$, $\beta$ auf den Gitterkoppler auf. Dabei ist zu beachten, dass sich durch die Scherung $\beta$ der Einkoppelwinkel des entsprechenden optischen Pfades leicht ändert. Die Formel zur Bestimmung des Einkopplungswinkels muss entsprechend um den Winkel $\beta$ erweitert werden, es ergibt sich:

$$\alpha = \arcsin\left(\sqrt{N(\lambda,j)^2 - \sin^2\beta} - \frac{\lambda}{\Lambda_K}\right) \qquad (5)$$

Diese muss in der Rechnung für die Minimierung des Divergenzwinkels laut Formel (3) bzw. (4) entsprechend berücksichtigt werden, um dennoch $\Delta\alpha<6°$ zu erhalten.

Vorteilhafterweise wird auch in dieser Ausführungsform nur ein Goniometeraufbau benötigt, daher bleiben die bereits erwähnten Vorteile, der Reduzierung von Materialaufwand und Bauraum auch in dieser Ausführungsform erhalten.

Aufgrund der Impulserhaltung läuft das unter dem gescherten Winkel einfallende Licht auch im Wellenleiter leicht schräg. Durch etwas breitere Ausleuchtung des Gitterkopplers kann der Bereich von Interesse jedoch mit allen Wellenlängen wieder voll ausgeleuchtet werden.

In einer Ausführungsform der Erfindung weist daher mindestens das eingestrahlte Licht der Wellenlänge $\lambda_k$ einer Lichtquelle entlang des Gitterkopplers ein Linienprofil auf.

Die Erzeugung dieser Linienprofile kann erfindungsgemäß entweder durch Aufweiten in der entsprechenden Dimension z.B. mit Hilfe von Zylinderlinsen oder Powell-Linsen erreicht werden, oder durch Scannen des Lichtbündels mit Hilfe eines rotierenden polygonalen Strahlversatzprismas. Eine solche Ausführungsform ist vorteilhaft um den Wellenleiter auf seiner gesamten Breite beleuchten zu können. Bei Verwendung einer Linienbeleuchtung fällt insbesondere eine Scherung eines oder mehrerer Lichtquellen, die erfindungsgemäß in einen Wellenleiter eingekoppelt werden, weniger stark ins Gewicht.

In einer Ausführungsform der vorliegenden Erfindung sind Strahlformungsmittel teleskopartig angeordnet. In einer besonders bevorzugten Ausführungsform der Erfindung, sind eine Powell-Linse und eine Zylinderlinse nacheinander angeordnet. Durch die Powell-Linse wird das Licht in einer Achse divergent aufgeweitet und durch die Zylinderlinse wird das aufgeweitete Lichtbündel anschließend in einer Achse wieder kollimiert.

Die beiden Strahlenbündel sind erfindungsgemäß so geformt, dass sich längs des Gitterkopplers eine Linie ergibt, sodass der Wellenleiter auf seiner gesamten Breite beleuchtet werden kann.

In einer Ausführungsform der Erfindung weist die Vorrichtung daher weiterhin mindestens ein lichtstrahlformendes Mittel in Form einer Zylinderlinse und/oder einer Powell-Linse und/oder eines rotierenden polygonalen Strahlversatzprisma auf, welche zwischen der Lichtquelle und der ersten Linse des Goniometeraufbaus angeordnet sind.

Alle Merkmale, die für die erfindungsgemäße Vorrichtung beschrieben wurden, finden auch in dem im Folgenden beschriebenen erfindungsgemäßen Verfahren Anwendung und umgekehrt.

Die Erfindung stellt weiterhin ein Verfahren bereit, mit dem Licht aus mindestens zwei Lichtquellen mit verschiedenen Wellenlängen ($\lambda_1$, $\lambda_2$) über einen Gitterkoppler mit einer Gitterperiode in einen Wellenleiter eingekoppelt werden kann. Erfindungsgemäß wird Licht aus mindestens zwei Lichtquellen mit verschiedenen Wellenlängen ($\lambda_1$, $\lambda_2$) auf den Gitterkoppler eingestrahlt und das Licht der Wellenlänge $\lambda_1$ mit dem Einkoppelwinkel $\alpha_1$ in die Wellenleitermode $j_1$ und das Licht der Wellenlänge $\lambda_2<\lambda_1$ mit dem Einkoppelwinkel $\alpha_2$ in die Wellenleitermode $j_2$ eingekoppelt, mit $j_2>j_1$. Optional kann Licht mindestens einer weiteren Lichtquelle mit der Wellenlänge $\lambda_k<\lambda_2<\lambda_1$ und dem Einkoppelwinkel $\alpha_k$ in die Wellenleitermode $j_k$ eingekoppelt werden, mit $j_k>j_2>j_1$.

In einer Ausführungsform des erfindungsgemäßen Verfahrens wird Licht aus vier Lichtquellen mit unterschiedlicher Wellenlänge in den Wellenleiter eingekoppelt. Bevorzugt wird Licht aus drei Lichtquellen mit unterschiedlicher Wellenlänge in den Wellenleiter eingekoppelt. Besonders bevorzugt wird Licht aus zwei Lichtquellen mit unterschiedlicher Wellenlänge in den Wellenleiter eingekoppelt.

Erfindungsgemäß ist der Betrag der Differenz zwischen den Einkoppelwinkeln (Divergenzwinkel) verschiedener Lichtquellen $\Delta\alpha<6°$, bevorzugt $\Delta\alpha<3°$, besonders bevorzugt $\Delta\alpha\approx0°$.

In einer besonders vorteilhaften Ausführungsform der vorliegenden Erfindung ist der Divergenzwinkel gleich oder kleiner als die Resonanzbreite bzw. der Akzeptanzwinkel des Gitterkopplers. In diesem Fall können vorteilhafterweise Lichtbündel mit diesen Wellenlängen gleichzeitig über den Gitterkoppler in den Wellenleiter eingekoppelt werden.

In einer Ausführungsform der Erfindung wird das Licht der mindestens zwei Lichtquellen mit verschiedenen Wellenlängen durch einen Goniometeraufbau mit einem virtuellen Drehpunkt auf dem Gitterkoppler in den Wellenleiter eingekoppelt.

Erfindungsgemäß durchläuft ein Strahlbündel einer Wellenlänge nach dem Verlassen einer Lichtquelle eine erste Linse und trifft anschließend auf einen Drehspiegel, der das Strahlbündel auf eine weitere Linse lenkt. Nach dem Durchlaufen der zweiten Linse trifft das Strahlbündel auf den Gitterkoppler, über den das Strahlbündel in den Wellenleiter eingekoppelt wird.

In einer Ausführungsform der Erfindung wird das Licht der mindestens zwei Lichtquellen mit verschiedenen Wellenlängen kollinear vereinigt in den Wellenleiter eingekoppelt. Der erfindungsgemäße Goniometeraufbau ermöglicht dabei, dass ein kollimiert in den Goniometeraufbau eingestrahltes Lichtbündel diesen Aufbau wieder kollimiert verlässt. Weiterhin stellt der erfindungsgemäße Aufbau des Goniometers sicher, dass die von der dem Wellenleiter näher gelegenen Linse erzeugte Abbildung des realen Drehpunkts mit der Ebene des Wellenleiters zusammenfällt, sodass beim Verstellen des Winkels der Auftreffpunkt des Lichts nicht wandert. Auf diese Weise können die benötigenden Einkoppelwinkel $\alpha_1$ für die Wellenlänge $\lambda_1$, welche in die Mode $j_1$ des Wellenleiters eingekoppelt wird, und $\alpha_2$ für die Wellenlänge $\lambda_2$, welche in die Mode $j_2$ des Wellenleiters eingekoppelt wird, eingestellt werden ohne das beim Verstellen des Winkels der Auftreffpunkt auf dem Gitterkoppler wandert.

Weiterhin wird in einer Ausführungsform der Erfindung das Licht der mindestens zwei Lichtquellen mit verschiedenen Wellenlängen zeitgleich in den Wellenleiter eingekoppelt. Vorteilhaft an dieser Ausführungsform ist, dass gleichzeitig Licht mehrerer Wellenlängen in einen Wellenleiter eingekoppelt werden kann, ohne Zeitverlust beim Umschalten zwischen Wellenlängen.

Hierfür wird in einer Ausführungsform der Erfindung das Licht der mindestens zwei Lichtquellen mit verschiedenen Wellenlängen zeitgleich über einen Drehspiegel geleitet und in den Wellenleiter eingekoppelt. Diese Ausführungsform findet Verwendung, wenn der Divergenzwinkel $\Delta\alpha$ gleich oder kleiner ist als die Resonanzbreite des Gitterkopplers.

Falls der Divergenzwinkel $\Delta\alpha$ größer ist als die Resonanzbreite des Gitterkopplers, kann in einer Ausführungsform des erfindungsgemäßen Verfahrens in Abhängigkeit von der Stellung des Drehspiegels jeweils eine Wellenlänge in den Wellenleiter einkoppeln und durch Verstellen des Drehspiegels zwischen verschiedenen Wellenlängen mit hoher Frequenz (> 1 Hz) hin- und hergeschalten werden.

In einer weiteren Ausführungsform des erfindungsgemäßen Verfahrens werden das Licht mit einer ersten Wellenlänge und zumindest das Licht mit einer zweiten Wellenlänge daher nacheinander in den Wellenleiter eingekoppelt.

In einer weiteren Ausführungsform der Erfindung wird das Licht der mindestens zwei Lichtquellen mit verschiedenen Wellenlängen zeitgleich über mehrere Drehspiegel geleitet und in den Wellenleiter eingekoppelt, wobei das Licht einer Wellenlänge über einen ersten Drehspiegel geleitet wird und jeweils das Licht mit einer weiteren Wellenlänge über einen weiteren Drehspiegel geleitet wird.

In dieser Ausführungsform wird mindestens der optische Pfad des Lichts mit einer ersten Wellenlänge um einen Winkel $\beta$ in einer Ebene parallel zum Wellenleiter geschert. Der Lichtstrahl der Lichtquelle, deren optischer Pfad um den Winkel $\beta$ geschert wurde, durchläuft die erste Linse und wird durch den Drehspiegel auf die zweite Linse gelenkt. Diese lenkt den gescherten Strahl auf den Gitterkoppler wo er unter dem Winkel $\alpha, \beta$ auftrifft.

In einer weiteren Ausführungsform der Erfindung wird das Licht von zwei Lichtquellen geschert, vorzugsweise symmetrisch zu einer Ebene parallel zum Wellenleiter, also das Licht einer Lichtquelle um den Winkel $\beta$ und das Licht einer weiteren Lichtquelle um den Winkel $-\beta$. Die Winkel $\beta$ können im Wesentlichen frei gewählt werden, solange abhängig vom Strahldurchmesser genug Platz für eine Trennung der Wellenlängen auf den beiden Drehspiegeln ist.

Die Formel zur Bestimmung des Einkoppelwinkels muss entsprechend um den Winkel $\beta$ erweitert werden. Dies ist in der Formel (5) berücksichtigt.

Diese Ausführungsform hat den Vorteil, dass Licht verschiedener Lichtquellen zeitgleich über den Gitterkoppler in den Wellenleiter eingekoppelt werden kann. Insbesondere kann diese Ausführungsform verwendet werden, wenn der Divergenzwinkel zwar $\Delta\alpha<6°$ jedoch größer ist als die Resonanzbreite des Gitterkopplers, die typischerweise im Bereich von 0.1° liegt. Es besteht der Vorteil, dass ohne Verstellen des Winkels Licht verschiedener Wellenlängen gleichzeitig in den Wellenleiter eingekoppelt werden kann. Die gleichzeitige Einkopplung von Licht verschiedener Wellenlängen bietet daher eine große Zeitersparnis.

In einer weiteren Ausführungsform der Erfindung wird das Licht mindestens einer Lichtquelle geformt. In einer Ausführungsform der Erfindung wird das Licht mindestens einer Lichtquelle so geformt, dass sich entlang des Gitterkopplers ein Linienprofil ergibt.

In einer Ausführungsform der Erfindung wird das Licht jeder Lichtquelle geformt.

Bevorzugt wird das Licht mindestens einer Lichtquelle zu einem Linienprofil geformt, in dem das Lichtbündel nach dem Verlassen der Lichtquelle mindestens eine Zylinderlinse und/oder eine Powell-Linse durchläuft oder durch ein rotierendes polygonales Strahlversatzprisma gescannt wird. Anschließend durchläuft das so geformte Lichtbündel den bereits beschriebenen Goniometeraufbau, trifft auf den Gitterkoppler und wird in den Wellenleiter eingekoppelt. Das Strahlbündel ist erfindungsgemäß so geformt, dass sich längs des Gitterkopplers eine Linie ergibt und der Wellenleiter damit vorteilhafterweise auf seiner gesamten Breite beleuchtete wird.

In einer weiteren Ausführungsform der Erfindung wird das Licht jeder Lichtquelle geformt und dadurch kollinear vereinigt. Bevorzugt geschieht dies durch mindestens einen Strahlvereiniger und/oder mindestens eine Kollimationslinse. Strahlvereiniger und/oder Kollimationslinse sind dabei bevorzugt nach den Lichtquellen angeordnet. Eine Kollimationslinse ist beispielsweise eine Sammellinse.

In einer Ausführungsform der Erfindung ist im optischen Weg jedes Lichtstrahls einer Wellenlänge mindestens ein lichtstrahlformendes Mittel angeordnet. In einer bevorzugten Ausführungsform kann das mindestens eine lichtstrahlformende Mittel im optischen Weg mehrerer Lichtstrahlen mit verschiedenen Wellenlängen angeordnet sein, so dass das mindestens eine lichtstrahlformende Mittel sich räumlich über den optischen Weg mehrerer Lichtquellen erstreckt.

Besondere Vorteile gegenüber dem Stand der Technik bietet die vorliegende Erfindung, durch

- die Reduktion des Divergenzwinkels auf $\Delta\alpha < 6°$ ohne Zuhilfenahme zusätzlicher optomechanischer Bauteile, wie z.B. einem Multifacettenprisma;

- die Realisierung eines als Goniometer mit virtuellem Drehpunkt ausgeführten Winkelverstellers für mehrere Wellenlängen, bei denen sich der Auftreffpunkt des Lichtes auf dem Wellenleiter beim Verstellen des Winkels nicht ändert durch die Reduktion des Divergenzwinkels auf $\Delta\alpha < 6°$.

Weiterhin betrifft die Erfindung die Verwendung der erfindungsgemäßen Vorrichtung und/oder des erfindungsgemäßen Verfahrens zur Dunkelfeldanregung in der Molografie und der Fluoreszenzspektroskopie.

Die Erfindung wird im Folgenden anhand von vier Figuren und zwei Ausführungsbeispielen näher erläutert.

Figur 1      zeigt eine schematische Darstellung der Einkopplung von Licht mit zwei verschiedenen Wellenlängen in zwei verschiedene Wellenleitermoden;

Figur 2      zeigt die Einkopplung von Licht mit zwei Wellenlängen, welches kollinear vereinigt durch einen Goniometeraufbau mit virtuellem Drehpunkt auf dem Gitterkoppler in einen Wellenleiter eingekoppelt wird;

Figur 3      zeigt die erfindungsgemäße Vorrichtung mit einem Goniometeraufbau mit zwei Drehspiegeln; und

Figur 4      zeigt die erfindungsgemäße Vorrichtung mit einem Goniometeraufbau mit zwei Drehspiegeln und zwei Mitteln zur Formung der eingestrahlten Lichtbündel;

Figur 5      zeigt die Dicke der wellenleitenden Schicht d in Abhängigkeit vom effektiven Brechungsindex N;

Figur 6      zeigt die Dicke der wellenleitenden Schicht d in Abhängigkeit vom Divergenzwinkel $\alpha$.

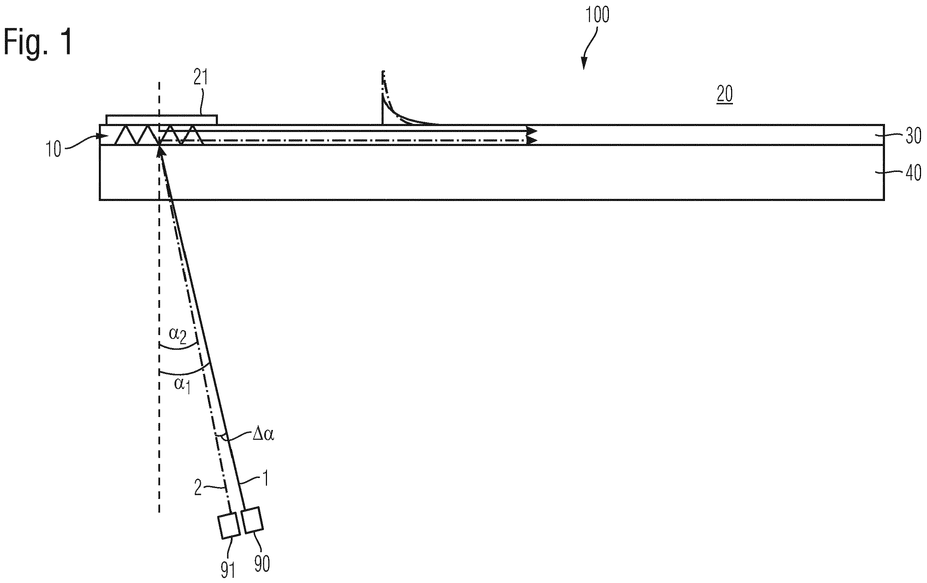

**Figur 1** zeigt schematisch den Wellenleiter mit einem Gitterkoppler 10. Der Wellenleiter besteht aus einer wellenleitenden Schicht 30 der Dicke d an die eine Substratschicht 40 und eine Deckschicht angrenzen, die aus den Schichten 20 und 21 gebildet wird. Die Schicht 20 besteht beispielsweise aus Luft oder Wasser und weist einen Brechungsindex $n_{D1}$ auf und die Schicht 21 besteht beispielsweise aus $SiO_2$ und weist einen Brechungsindex $n_{D2}$ auf. Das Material der Substratschicht weist einen Brechungsindex ns auf und das Material der wellenleitenden Schicht einen Brechungsindex nw. Der Brechungsindex der Deckschicht und der Substratschicht sind dabei immer kleiner als der Brechungsindex der wellenleitenden Schicht. Wird die Ausbreitung von Licht in einem Wellenleiter mit den Maxwell-Gleichungen beschrieben und werden die dabei durch die Geometrie des Wellenleiters gegebenen Randbedingungen berücksichtigt, so resultiert mit der Modengleichung eine Eigenwertgleichung, die nur für einen diskreten, endlichen Satz von gebundenen Lichtzuständen gelöst werden kann. Die Lösungen der Modengleichung sind die sogenannten Wellenleitermoden, welche sich durch ihre effektiven Brechungsindices N unterscheiden und deren Ordnung mit der Modenzahl j nummeriert wird. Für den effektiven Brechungsindex N gilt dabei $n_W > N > max(n_D, n_S)$ wobei $max(n_D, n_S)$ das Maximum, d.h. den größeren der Brechungsindices $n_D$, $n_S$ bezeichnet.

Das Licht mindestens zweier Lichtquellen 90, 91 wird erfindungsgemäß über einen Gitterkoppler 10 mit einer Gitterkonstante $\Lambda_K$ eingekoppelt. Dabei wird Licht 1 der Wellenlänge $\lambda_1$ in die Wellenleitermode $j_1$ mit dem Einkoppelwinkel $\alpha_1$ eingekoppelt und Licht 2 der Wellenlänge $\lambda_2 < \lambda_1$ in die Wellenleitermode $j_2$ mit dem Einkoppelwinkel $\alpha_2$ eingekoppelt, wobei $j_2 > j_1$ ist. Da die effektiven Brechungsindices N für verschiedene Moden im Wellenleiter unterschiedlich sind, ändert sich auch der Einkoppelwinkel entsprechend. Die Moden $j_1$ und $j_2$ in die das Licht der mindestens zwei Lichtquellen 90, 91 eingekoppelt wird, sowie der Aufbau des Wellenleiters, werden erfindungsgemäß so gewählt, dass sich die Einkoppelwinkel $\alpha_1$ und $\alpha_2$ um maximal 6° unterscheiden. Das heißt, der Divergenzwinkel $\Delta\alpha = |\alpha_1 - \alpha_2|$ ist $\Delta\alpha < 6°$.

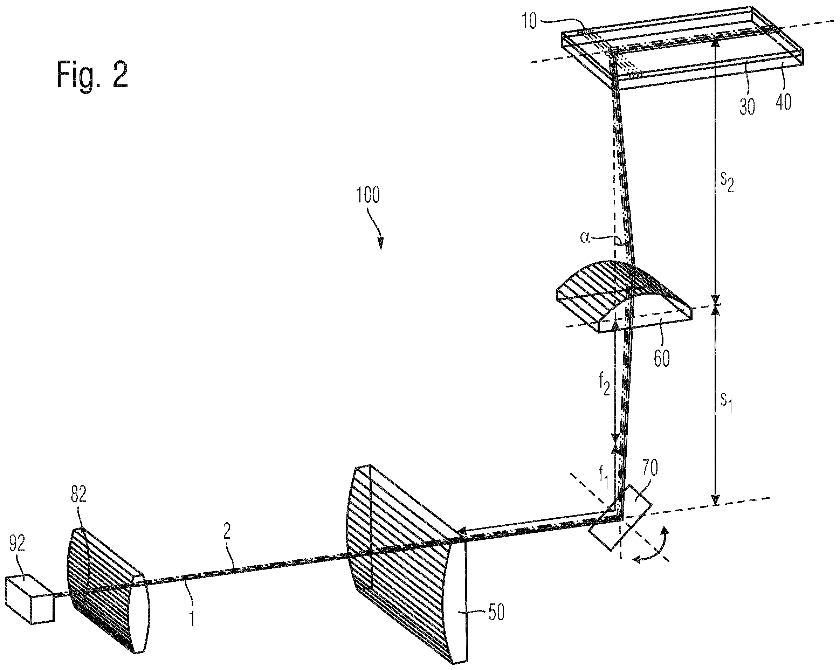

**Figur 2** zeigt eine Ausführungsform der erfindungsgemäßen Vorrichtung 100 mit einem Goniometeraufbau. Der Goniometeraufbau weist eine erste Linse 50 auf, einen Drehspiegel 70 und eine zweite Linse 60. Die Lichtquelle 92 beinhaltet zwei Lichtquellen, die so nah beieinander angeordnet sind, dass nach Durchlaufen der Sammellinse 82 die Lichtstrahlen 1, 2 kollinear vereinigt auf die Linse 50 treffen. Die Sammellinse 82 fungiert dabei als Kollimationslinse. Die Linse 50 und die Linse 60 sind in der Figur 2 so angeordnet, dass der optische Weg zwischen den Linsen der Summe der Brennweite $f_1$ der Linse 50 und der Brennweite $f_2$ der Linse 60 entspricht. In anderen Ausführungsformen der erfindungsgemäßen Vorrichtung 100 kann der optische Weg zwischen den Linsen 50, 60 auch größer oder kleiner als die Summe der jeweiligen Brennwerte der Linsen 50 und 60 sein.

Des Weiteren wird der Wellenleiter mit Gitterkoppler 10 so positioniert, dass sich der Abstand $s_1$ vom Drehspiegel 70 zur zweiten Linse 60 und der Abstand $s_2$ der zweiten Linse 60 zur Wellenleiterebene entsprechen der Abbildungsgleichung $1/s_1 + 1/s_2 = 1/f_2$ verhalten. Diese Bedingung stellt sicher, dass die von der zweiten Linse 60 erzeugte Abbildung des realen Drehpunkts mit der Ebene des Wellenleiters zusammenfällt, sodass beim Verstellen des Winkels der Auftreffpunkt des Lichts nicht wandert.

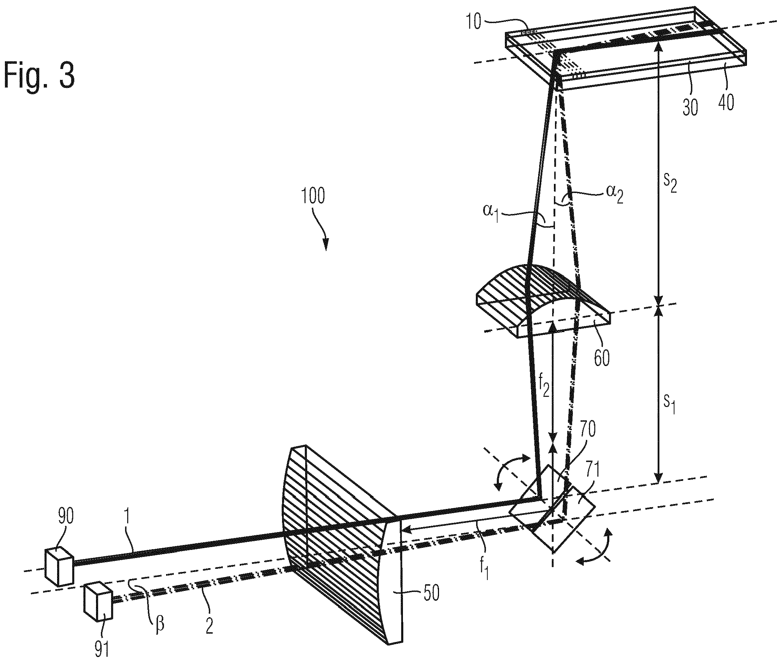

**Figur 3** zeigt eine Ausführungsform der erfindungsgemäßen Vorrichtung 100 mit einem Goniometeraufbau, der zwei Drehspiegel 70, 71 aufweist. Die Drehspiegel 70, 71 sind parallel im optischen Weg angeordnet. Eine Lichtquelle 91 wird um den Winkel $\beta$ in einer Ebene parallel zum planaren Wellenleiter geschert angeordnet und erzeugt ein Lichtbündel 2 der Wellenlänge $\lambda_2$. Die zweite Lichtquelle 90 befindet sich im optischen Weg und erzeugt ein Lichtbündel 1 der Wellenlänge $\lambda_1$.

Die Lichtbündel 1 und 2 werden durch die erste Linse 50 gelenkt und treffen auf die Drehspiegel 70, 71, wobei das Lichtbündel 1 auf den Drehspiegel 70 trifft und das Lichtbündel 2 auf den Drehspiegel 71. Beide Lichtbündel 1, 2 werden anschließend durch die zweite Linse 60 auf den Wellenleiter mit dem Gitterkoppler 10 gelenkt. Dabei trifft das Lichtbündel 1 unter dem Einkoppelwinkel $\alpha_1$ auf und das Lichtbündel 2 unter dem Einkoppelwinkel $\alpha_2$, wobei der Einkoppelwinkel $\alpha_2$ auch vom Scherwinkel $\beta$ abhängt wie in Formel (4) angegeben. Aufgrund der Impulserhaltung verläuft das unter dem gescherten Winkel eingestrahlte Licht 2 auch im Wellenleiter leicht schräg.

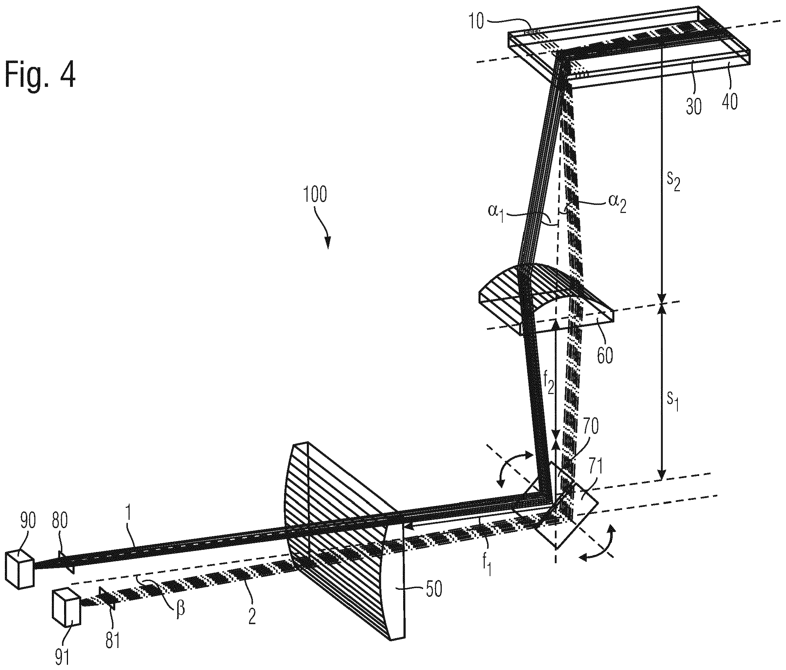

**Figur 4** zeigt die erfindungsgemäße Vorrichtung 100 mit einem Goniometeraufbau wie in Figur 3 beschrieben, zusätzlich weist die erfindungsgemäße Vorrichtung 100 noch zwei Mittel 80, 81 zur Formung der Lichtstrahlen 1, 2 auf. Diese Mittel sind zwischen den Lichtquellen 90, 91 und der ersten Linse 50 angeordnet. Die Mittel zur Formung der Lichtstrahlen 1, 2 können erfindungsgemäß Anordnungen von Zylinderlinsen und/oder Powell-Linsen und/oder ein rotierendes polygonales Strahlversatzprisma sein. In einer besonders vorteilhaften Ausführungsform kann auch nur ein gemeinsames Mittel 80, 81 zur Strahlformung beider Lichtquellen 90, 91 verwendet werden, das sich räumlich über beide Teilstrahlen erstreckt.

Das Lichtbündel 1 durchläuft das lichtstrahlformende Mittel 80 wodurch ein linienförmiges Profil erzeugt wird. Das Lichtbündel 1 durchläuft anschließend den optischen Weg des Goniometeraufbaus und wird unter dem Einkoppelwinkel $\alpha_1$ über den Gitterkoppler 10 in die wellenleitende Schicht 30 des Wellenleiters eingekoppelt. Das Lichtbündel 2 durchläuft das lichtstrahlformende Mittel 81 wodurch ein linienförmiges Profil erzeugt wird. Die Lichtquelle 91, die das Lichtbündel 2 erzeugt, ist dabei um den Winkel $\beta$ in einer Ebene parallel zum planaren Wellenleiter geschert. Das Lichtbündel 2 durchläuft anschließend den optischen Weg des Goniometeraufbaus und wird unter dem Einkoppelwinkel $\alpha_2$ über den Gitterkoppler 10 in die wellenleitende Schicht 30 des Wellenleiters eingekoppelt.

Die beiden Strahlbündel 1, 2 sind dabei erfindungsgemäß so geformt, dass sich längs des Gitterkopplers 10 eine Linie ergibt, sodass der Wellenleiter auf seiner gesamten Breite beleuchtet wird.

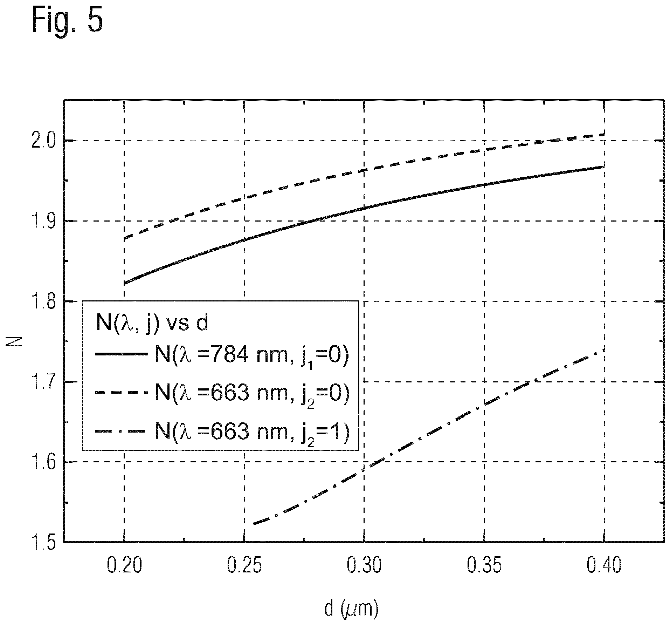

**Figur 5** zeigt den numerisch berechneten, effektiven Brechungsindex verschiedener gebundener Moden in Abhängigkeit von der Schichtdicke d für einen Wellenleiter. Die Wellenleiterschicht besteht aus Tantalpentoxid, eingebettet zwischen Glas als Substrat und Siliziumdioxid als Deckschicht. Gezeigt sind die effektiven Brechungsindices N für $\lambda_1$=784 nm und die nullte Mode ($j_1$=0) und für $\lambda_2$=663 nm und die nullte ($j_2$=0) und erste ($j_2$=1) Mode. N ist nur für gebundene Lösungen gezeigt, daher beginnt die Auftragung für die erste Mode bei $\lambda_2$=663 nm erst oberhalb von d=250 nm.

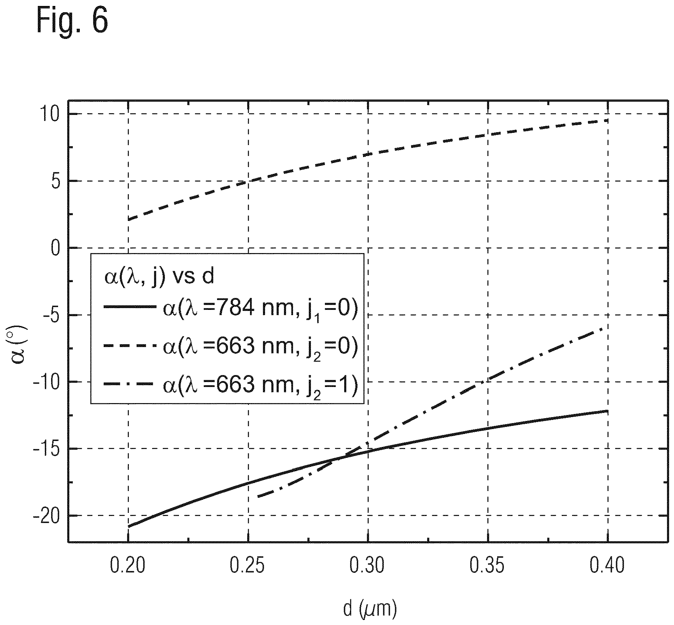

**Figur 6** zeigt die Einkopplungswinkel $\alpha$, die man erhält, wenn man die in Figur 5 errechneten effektiven Brechungsindices N bei einer Kopplerperiode von $\Lambda_K$ = 360 nm in Formel (2) einsetzt. Die Kopplerperiode $\Lambda_K$ = 360 nm wurde nach Formel 2 gewählt, um für die erste Wellenlänge $\lambda_1$=784 nm in der $j_1$=0 Mode einen Einkopplungswinkel zwischen -10 und -20° zu erhalten. Kleine negative Einkopplungswinkel sind vorteilhaft, da nicht eingekoppeltes Licht des auf den Gitterkoppler gerichteten Lichtbündels entgegen der eingekoppelten Lichtrichtung weiter läuft und die Messungen, die mittels des eingekoppelten Lichts vorgenommen werden, nicht stören kann.

Aus dem Schnittpunkt bei d=0.288 $\mu$m und $\alpha$= -15.7° erhält man graphisch die erfindungsgemäß notwendige Dicke d nach Formel (4) für $\Delta\alpha$ = 0°.

**Ausführungsbeispiel 1**

Das Licht einer Lichtquelle mit einer Wellenlänge $\lambda_1$=784 nm und das Licht einer Lichtquelle mit einer Wellenlänge $\lambda_2$=663 nm werden aus dem Medium Luft über einen Gitterkoppler beispielsweise mit einer Gitterkonstante $\Lambda_K$=370 nm und m=1 in einen singlemodigen Wellenleiter aus dem Stand der Technik mit einem effektiven Brechungsindex $N(\lambda_1, j_1=0)$ =1.928 und $N(\lambda_2, j_2=0)$ = 1.976 eingekoppelt. Es ergibt sich nach Formel (1) damit für das Licht mit der Wellenlänge $\lambda_1$=784 nm ein Einkoppelwinkel von $\alpha_1$=-11.0° und für das Licht mit der Wellenlänge $\lambda_2$=663 nm ein Einkoppelwinkel von $\alpha_2$=+10.6°. Der Divergenzwinkel beträgt demnach $\Delta\alpha=|\alpha_1-\alpha_2|\approx20°$.

**Ausführungsbeispiel 2**

Es wird Licht einer Lichtquelle mit einer Wellenlänge $\lambda_1$=784 nm und Licht einer Lichtquelle mit einer Wellenlänge $\lambda_2$=663 nm aus dem Medium Luft erfindungsgemäß in einen Wellenleiter eingekoppelt. Der Wellenleiter mit einer wellenleitenden Schicht aus $Ta_2O_5$ mit einem Brechungsindex $n_W$=2.094 und einer Dicke d=300 nm, weist eine Substratschicht D263 mit einem Brechungsindex $n_S$=1.517 auf. Abgedeckt wird die wellenleitende Schicht im Bereich des Gitterkopplers mit einer Deckschicht aus $SiO_2$, die einen Brechungsindex von $n_{D1}$=1.473 aufweist. Außerhalb des Gitterkopplers grenzt an die wellenleitende Schicht eine Deckschicht aus Luft ($n_{D2}$=1.0) oder wahlweise aus Wasser ($n_{D2}$=1.33). Das Licht beider Lichtquellen wird in TE-Polarisation eingestrahlt. Eine Lichtquelle gibt Licht der Wellenlänge $\lambda_1$=784 nm ab, welches für die Dunkelfeldbeleuchtung in der Molografie verwendet wird. Dieses Licht wird in die nullte Mode des Wellenleiters eingekoppelt, der effektive Brechungsindex beträgt $N(\lambda_1, j_1=0)$=1.928.

Die zweite Lichtquelle gibt Licht der Wellenlänge $\lambda_2$=663 nm ab, welches für die Fluoreszenzspektroskopie geeignet ist. Die Lichtquelle ist um den Winkel $\beta$=8° in einer Ebene parallel zum planaren Wellenleiter geschert. Dieses Licht wird in die erste Mode des Wellenleiters eingekoppelt ($j_2$=1, also TE1), für diese Mode ergibt sich dann ein effektiver Brechungsindex von $N(\lambda_2, j_2=1)$=1.588. Mit einer Gitterkopplerkonstante von $\Lambda_K$=360 nm ergeben sich identische Einkoppelwinkel $\alpha_1=\alpha_2$=-14.4° und damit ein Divergenzwinkel von $\Delta\alpha$=0°.

Da für ein umgebendes Medium mit einem Brechungsindex n> ~1.45 für Licht der Wellenlänge $\lambda_1$=784 nm neben der nullten auch die erste Mode erlaubt ist, ist die beschriebene Vorrichtung für das Licht der ersten Lichtquelle ($\lambda_1$=784 nm) im Bereich der Deckschicht aus $SiO_2$ mit dem Brechungsindex $n_{D1}$=1.473 multimodig und es ist neben der nullten auch die erste Mode erlaubt. Sobald das Licht dieser Wellenlänge jedoch den Bereich der Deckschicht aus $SiO_2$ verlässt und auf Medium von $n_{D2}$=1.0 (Luft) bis $n_{D2}$=1.33 (Wasser) trifft, ist nur noch die nullte Mode erlaubt und der Wellenleiter singlemodig. Vorteilhafterweise findet in diesem Bereich die Detektion statt und unerwünschtes Streulicht durch Intermodenstreuung wird effektiv unterdrückt.

**Bezugszeichenliste**

| | |
|---|---|
| 1, 2 | Lichtbündel |
| 10 | Gitterkoppler |
| 20, 21 | Deckschicht |
| 30 | Wellenleitende Schicht |
| 40 | Substratschicht |
| 50, 60 | Linse |
| 70, 71 | Drehspiegel |
| 80, 81, 82 | Lichtstrahlformende Mittel |
| 90, 91, 92 | Lichtquellen |
| 100 | Vorrichtung |

**Patentansprüche**

1. Vorrichtung (100) aufweisend einen Gitterkoppler (10) mit einer Gitterkonstante, mindestens zwei Lichtquellen (90, 91, 92) und einen planaren Wellenleiter zur Einkopplung von Licht mit mindestens zwei verschiedenen Wellenlängen ($\lambda_1$, $\lambda_2$) in den Wellenleiter, wobei der Wellenleiter eine wellenleitende Schicht (30) mit den effektiven Brechungsindices $N(\lambda_k, j_k)$, mit $\lambda_k$ der Wellenlänge des eingekoppelten Lichts und $j_k$ der Ordnung der Wellenleitermode, und der Dicke d aufweist, an die eine Substratschicht (40) und eine Deckschicht (20, 21) angrenzen; und Licht der Wellenlänge $\lambda_k$ einen Einkoppelwinkel $\alpha_k$ in den Wellenleiter aufweist; und der Betrag der Differenz zwischen den Einkoppelwinkeln verschiedener Lichtquellen der Divergenzwinkel $\Delta\alpha$ ist

   **dadurch gekennzeichnet, dass**
   die wellenleitende Schicht (30) eine Dicke d und einen effektiven Brechungsindex $N(\lambda_k, j_k)$ aufweist, so dass die Führung von Wellenleitermoden der Ordnung $j_k$>0 für mindestens eine eingekoppelte Wellenlänge möglich ist; und die dazu eingerichtet ist, Licht mit mindestens zwei verschiedenen Wellenlängen über den einen Gitterkoppler (10) unter einem Divergenzwinkel $\Delta\alpha$<6° einzukoppeln.

2. Vorrichtung (100) nach einem der vorangegangenen Ansprüche, **dadurch gekennzeichnet, dass** der Divergenzwinkel $\Delta\alpha$ bevorzugt $\Delta\alpha$<3°, besonders bevorzugt $\Delta\alpha\approx$0° beträgt.

3. Vorrichtung (100) nach einem der vorangegangenen Ansprüche, **dadurch gekennzeichnet, dass** sich die Wellenlängen ($\lambda_1$, $\lambda_2$, ...$\lambda_k$) des Lichts der Lichtquellen (90, 91, 92) jeweils um mindestens $\Delta\lambda$=100nm unterscheiden.

4. Vorrichtung (100) nach einem der vorangegangenen Ansprüche, **dadurch gekennzeichnet, dass** eine Lichtquelle (90) eine Wellenlänge im Bereich von 600nm-1000nm, bevorzugt im Bereich von 700nm-900nm, besonders bevor-

zugt von 780($\pm$10)nm aufweist und das eine weitere Lichtquelle (91) eine Wellenlänge im Bereich von 400nm-700nm, besonders bevorzugt von 660($\pm$10)nm aufweist.

5. Vorrichtung (100) nach einem der vorangegangenen Ansprüche, **dadurch gekennzeichnet, dass** die Vorrichtung weiterhin ein Goniometeraufbau aufweist, der mindestens einen Drehspiegel (70) und zwei Linsen (50, 60) und einen virtuellen Drehpunkt am Gitterkoppler (10) aufweist.

6. Vorrichtung (100) nach einem der vorangegangenen Ansprüche, **dadurch gekennzeichnet, dass** der Goniometeraufbau zwei Drehspiegel (70, 71) aufweist.

7. Vorrichtung (100) nach einem der vorangegangenen Ansprüche, **dadurch gekennzeichnet, dass** mindestens das eingestrahlte Licht der Wellenlänge $\lambda_k$ einer Lichtquelle (90, 91, 92) entlang des Gitterkopplers (10) ein Linienprofil aufweist.

8. Vorrichtung (100) nach einem der vorangegangenen Ansprüche, **dadurch gekennzeichnet, dass** die Vorrichtung weiterhin mindestens ein lichtstrahlformendes Mittel (80, 81) in Form einer Zylinderlinse und/oder einer Powell-Linse und/oder eines rotierenden polygonalen Strahlversatzprismas und/oder eines Strahlvereinigers und/oder einer Kollimationslinse aufweist.

9. Verfahren zum Einkoppeln von Licht aus mindestens zwei Lichtquellen (90, 91, 92) mit verschiedenen Wellenlängen ($\lambda_1$, $\lambda_2$) über einen Gitterkoppler (10) mit einer Gitterperiode in einen Wellenleiter, **dadurch gekennzeichnet, dass**

   • Licht aus mindestens zwei Lichtquellen (90, 91, 92) mit verschiedenen Wellenlängen ($\lambda_1$, $\lambda_2$) auf den Gitterkoppler (10) eingestrahlt wird;
   • Licht der Wellenlänge $\lambda_1$ mit dem Einkoppelwinkel $\alpha_1$ in die Wellenleitermode $j_1$ und Licht der Wellenlänge $\lambda_2<\lambda_1$ mit dem Einkoppelwinkel $\alpha_2$ in die Wellenleitermode $j_2$ eingekoppelt wird, mit $j_2>j_1$;
   • optional Licht mindestens einer weiteren Lichtquelle mit der Wellenlänge $\lambda_k<\lambda_2<\lambda_1$ mit dem Einkoppelwinkel $\alpha_k$ in die Wellenleitermode $j_k$ eingekoppelt wird, mit $j_k>j_2>j_1$;

   wobei der Betrag der Differenz zwischen den Einkoppelwinkeln verschiedener Lichtquellen $\Delta\alpha<6°$ beträgt.

10. Verfahren nach einem der vorangegangenen Ansprüche, **dadurch gekennzeichnet, dass** das Licht der mindestens zwei Lichtquellen (90, 91, 92) mit verschiedenen Wellenlängen durch einen Goniometeraufbau mit einem virtuellen Drehpunkt auf dem Gitterkoppler (10) eingekoppelt wird.

11. Verfahren nach einem der vorangegangenen Ansprüche, **dadurch gekennzeichnet, dass** das Licht der mindestens zwei Lichtquellen (90, 91, 92) mit verschiedenen Wellenlängen kollinear vereinigt eingekoppelt wird.

12. Verfahren nach einem der vorangegangenen Ansprüche, **dadurch gekennzeichnet, dass** das Licht der mindestens zwei Lichtquellen (90, 91, 92) mit verschiedenen Wellenlängen zeitgleich in den Wellenleiter eingekoppelt wird oder dass nacheinander das Licht mit einer ersten Wellenlänge und zumindest das Licht mit einer zweiten Wellenlänge eingekoppelt wird.

13. Verfahren nach einem der vorangegangenen Ansprüche, **dadurch gekennzeichnet, dass** mindestens der optische Pfad des Lichts mit einer ersten Wellenlänge um einen Winkel $\beta$ in einer Ebene parallel zum Wellenleiter geschert wird.

14. Verfahren nach einem der vorangegangenen Ansprüche, **dadurch gekennzeichnet, dass** das Licht mindestens einer Lichtquelle (90, 91, 92) so geformt wird, dass sich entlang des Gitterkopplers (10) ein Linienprofil ergibt.

15. Verwendung der Vorrichtung nach einem der Ansprüche 1 bis 8 und/oder des Verfahrens nach einem der Ansprüche 9 bis 14 zur Dunkelfeldanregung in der Molografie und der Fluoreszenzspektroskopie.

# Fig. 1

EP 3 835 764 A1

Fig. 2

EP 3 835 764 A1

Fig. 3

EP 3 835 764 A1

Fig. 4

# Fig. 5

N(λ, j) vs d

N(λ =784 nm, $j_1$=0)

N(λ =663 nm, $j_2$=0)

N(λ =663 nm, $j_2$=1)

d ($\mu$m)

Fig. 6

**Europäisches Patentamt**
**European Patent Office**
**Office européen des brevets**

# EUROPÄISCHER RECHERCHENBERICHT

**Nummer der Anmeldung**

EP 20 20 4673

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 86/07149 A1 (TIEFENTHALER KURT; LUKOSZ WALTER) 4. Dezember 1986 (1986-12-04) * Seite 15; Abbildung 2 * * Seite 28, Zeile 19 - Zeile 25 * | 1-15 | INV. G01N21/77 G02B6/124 |
| A | US 5 082 629 A (BURGESS JR LLOYD W [US] ET AL) 21. Januar 1992 (1992-01-21) * Spalte 6, Zeile 33 - Zeile 53 * * Spalte 6, Zeile 56 - Spalte 7, Zeile 9; Abbildung 1 * * Spalte 7, Zeile 31 - Zeile 48; Abbildung 3 * * Spalte 10, Zeile 56 - Spalte 11, Zeile 5 * * Spalte 15, Zeile 7 - Zeile 47 * | 1-4,8,9, 11,12,15 | ADD. G02B6/12 |
| A | GOLDMAN D S ET AL: "MINIATURIZED SPECTROMETER EMPLOYING PLANAR WAVEGUIDES AND GRATING COUPLERS FOR CHEMICAL ANALYSIS", APPLIED OPTICS, OPTICAL SOCIETY OF AMERICA, WASHINGTON, DC, US, Bd. 29, Nr. 31, 1. November 1990 (1990-11-01), Seiten 4583-4589, XP000162168, ISSN: 0003-6935, DOI: 10.1364/AO.29.004583 * Seite 4583 - Seite 4589; Abbildungen 1, 2, 5-7 * | 1-4,8,9, 11,12 | |
| A,D | US 3 724 953 A (JOHNSTON T) 3. April 1973 (1973-04-03) * Zusammenfassung; Abbildung 1 * | 5,10 | |

**RECHERCHIERTE SACHGEBIETE (IPC)**

G01N
G02B

Der vorliegende Recherchenbericht wurde für alle Patentansprüche erstellt

| Recherchenort | Abschlußdatum der Recherche | Prüfer |
|---|---|---|
| Berlin | 12. April 2021 | A. Jacobs |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 4673

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-04-2021

| Im Recherchenbericht angeführtes Patentdokument | Datum der Veröffentlichung | Mitglied(er) der Patentfamilie | Datum der Veröffentlichung |
|---|---|---|---|
| WO 8607149       A1 | 04-12-1986 | AU    5815886 A<br>EP    0226604 A1<br>JP    H0627703 B2<br>JP    S62503053 A<br>US    4815843 A<br>US    5071248 A<br>WO    8607149 A1 | 24-12-1986<br>01-07-1987<br>13-04-1994<br>03-12-1987<br>28-03-1989<br>10-12-1991<br>04-12-1986 |
| US 5082629        A | 21-01-1992 | CA    2072588 A1<br>EP    0507883 A1<br>JP    H06502012 A<br>US    5082629 A<br>WO    9110122 A1 | 30-06-1991<br>14-10-1992<br>03-03-1994<br>21-01-1992<br>11-07-1991 |
| US 3724953        A | 03-04-1973 | BE    794930 A<br>CA    981445 A<br>CH    563593 A5<br>DE    2305537 A1<br>FR    2171165 A1<br>GB    1414253 A<br>IT    978864 B<br>JP    S4889740 A<br>NL    7215967 A<br>SE    385053 B<br>US    3724953 A | 29-05-1973<br>13-01-1976<br>30-06-1975<br>16-08-1973<br>21-09-1973<br>19-11-1975<br>20-09-1974<br>22-11-1973<br>09-08-1973<br>31-05-1976<br>03-04-1973 |

EPO FORM P0461

Für nähere Einzelheiten zu diesem Anhang : siehe Amtsblatt des Europäischen Patentamts, Nr.12/82

**EP 3 835 764 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2618130 A1
- EP 1327135 B1
- US 3724953 A